# EUROPÄISCHE PATENTSCHRIFT

(11) **EP 1 513 895 B1**
(45) Veröffentlichungstag und Bekanntmachung des Hinweises auf die Patenterteilung: **21.05.2008**
(21) Anmeldenummer: 03759922.2
(22) Anmeldetag: 10.06.2003
(51) Int. Cl.: C08L 23/00, C08L 23/12, C08L 23/16

(54) **VERTRÄGLICHKEITSVERBESSERUNG DURCH SYNDIOTAKTISCHES POLYPROPYLEN**
COMPATIBILITY IMPROVEMENT ACHIEVED BY SYNDIOTACTIC POLYPROPYLENE
AMELIORATION DE COMPATIBILITE PAR DU POLYPROPYLENE SYNDIOTACTIQUE

(30) Priorität: 15.06.2002 DE 10226698
(43) Veröffentlichungstag der Anmeldung: 16.03.2005
(73) Patentinhaber: REHAU AG + Co, 95111 Rehau (DE)
(72) Erfinder: OTTOW, Martin, 45130 Essen (DE)
(86) Internationale Anmeldenummer: PCT/EP2003/006020
(87) Internationale Veröffentlichungsnummer: WO 2003/106552

(56) Entgegenhaltungen:
- EP-A- 0 969 043
- EP-A- 1 118 637

## Beschreibung

Die Erfindung bezieht sich auf den Einsatz von syndiotaktischem Polypropylen in thermoplastischen Elastomeren auf Basis von PP/EPDM mit vernetzter EPDM-Phase.

Thermoplastische Elastomere sind dem Fachmann bereits seit Jahren bekannt. In letzter Zeit gewinnen sie immer mehr an Bedeutung. Dieses Wachstum ist auf die interessante Kombination von kautschukartigen Materialeigenschaften in Verbindung mit der Möglichkeit der Thermoplast-Verarbeitung zurückzuführen. Man unterscheidet je nach chemischem Aufbau zwischen Blockcopolymeren aus einem Makromolekül, beispielsweise Styroltypen "TPE-S", Polyetheramide "TPE-A" usw. und Elastomerblends, die nebeneinander aus einer thermoplastischen, unvernetzten und einer teil- bzw. vollvernetzten Phase bestehen. Die Vernetzung erfolgt während der Aufbereitung.

Die Gruppe der thermoplastischen Elastomere auf Basis von Polyolefinblends ist am weitesten verbreitet. Für die Weichphase werden in der Regel hochmolekulare EPDM-Co- und Terpolymere eingesetzt. Die Vernetzung während der Aufbereitung erfolgt entweder durch Phenolharze (sh. US 4104210), durch Peroxyde (sh. US 4267080) oder beispielsweise durch Hydrosilylierungsreaktionen (sh. EP 0 855 426). Heute werden zur Vernetzung fast ausschließlich Phenolharze eingesetzt.

Die Schrift EP 0 969 043 A1 offenbart eine thermoplastische vernetzte Zusammensetzung, die aus einem Kautschuk, aus semikristallinem Polypropylen und einem random-Propylen-Copolymer besteht. Die Schrift lehrt, daß das random-Propylen-Copolymer zur Modifizierung dient, um die physikalischen Eigenschaften der thermoplastischen Vulkanisate zu verbessern. Gemäß der Offenbarung dieser Schrift handelt es sich bei dem random-Propylen-Copolymeren um solche, die einen Anteil an ethylenischen ungesättigten Monomeren enthalten. Bevorzugte ethylenisch ungesättigte Monomere sind Ethylen oder Monoolefine mit 4 bis 20 Kohlenstoff-Atomen. Daneben enthält der Rest der random-Propylen-Copolymere wünschenswerter Weise sich wiederholende Einheiten, die aus der Polymerisation des Polypropylens abgeleitet sind, wobei die sich wiederholenden Einheiten besonders gewünscht in einer vorherrschend isotaktischen oder syndiotaktischen Konfiguration vorliegen.

Die physikalischen Eigenschaften thermoplastischer Elastomere auf Basis PP/EPDM sind im Wesentlichen abhängig von der Ausbildung einer Hart-/Weich-Morphologie während der Aufbereitung. Als Ergebnis dieser sog. dynamischen Vernetzung bildet sich eine thermoplastische, kontinuierliche Polypropylenmatrix aus, in die vernetzte, kugelförmige EPDM-Domänen eingelagert sind.

Es ist allgemein anerkannt, dass für den Aufbau dieser Morphologie das Viskositätsverhältnis zwischen PP und unvemetztem EPDM entscheidend ist. Eine optimale Dispergierung von isotaktischem Polypropylen und EPDM ist dabei bisher nur bei einem weitgehend identischen, rheologischen Verhalten beider Komponenten möglich.

Das bedeutet aber auch, dass in Folge der hohen Schmelzeviskosität des EPDM bislang nur hochmolekulare PP-Typen eingesetzt werden können.

Dies hat folgende Nachteile:
- Gut fließende spritzgussfähige Rezepturen konnten bisher mit hochmolekularem PP als Matrix nicht bereitgestellt werden.
- Bei der Extrusionsverarbeitung von herkömmlichem TPE-V auf Basis PP/EPDM treten in Abhängigkeit zur Extrusionsgeschwindigkeit und Werkzeuggeometrie Oberflächendefekte in Form von Schuppen auf. Diese sog. Shark-Skin-Oberflächenstrukturierung tritt ab einem kritischen Durchsatz auf, der material- und werkzeugabhängig ist.

Diese Oberflächendefekte resultieren aus einem Schmelzebruch auf Grund hoher Dehnbeanspruchung, die sich aus der abrupten Beschleunigung wandnaher Schmelzeschichten ergibt, wenn diese aus der Düse abrupt austreten.

Derartige Oberflächendefekte sind für Sichtteile nicht akzeptabel.

Will man also zum Erreichen einer glatten Oberfläche die Extrusionsgeschwindigkeit nicht in wirtschaftlich nicht mehr akzeptable Bereiche reduzieren, behilft man sich derzeit mit dem Zusatz von ca. 1,5 Mol% Fluorpolymeren als externe Gleitmittel. Diese Fluorpolymere erhöhen im Extrusionswerkzeug die Fließgeschwindigkeit wandnaher Schichten und vermeiden dadurch das Auftreten großer Geschwindigkeitsgradienten zwischen der Schmelze im Werkzeug und der Schmelze unmittelbar nach dem Austreten aus dem Werkzeug.

Allerdings werden durch den Einsatz von Fluorpolymeren die Materialeigenschaften der TPE-V negativ beeinflusst. Beispielsweise ist ein Ansteigen der Shorehärte zu beobachten, weiterhin sinkt die Festigkeit und die Elastizität des Materials im Bauteil. Produktionstechnisch erhöht sich der Aufwand für die Extrusionsfertigung wesentlich, da das Fluorpolymer vor der Verarbeitung mit dem TPE-V gemischt werden muss und zusätzlich Reinigungsschnitte von Extruderschnecke, Extruderzylinder und Extrusionswerkzeuge anfallen.

Es stellte sich daher die Aufgabe, TPE-V-Rezepturen bereitzustellen, die ohne Gleitmittel auskommen, die genannten Oberflächendefekte im für die Extrusion leicht gängigen Scherratenbereich vermeiden und auch die Rezeptierung von leicht fließenden Spritzgusstypen ermöglichen.

Überraschenderweise konnte die Aufgabe durch Zugabe von syndiotaktischem Polypropylen gelöst werden. In Verbindung mit diesem lassen sich Massen einsetzen, die über ein deutlich niedrigeres Molekulargewicht, also über eine geringere Viskosität verfügen. Die rheologische Verträglichkeit zwischen EPDM und Polypropylen wird also durch die Zugabe von syndiotaktischem Polypropylen erhöht und dabei der Aufbau der gewünschten Morphologie während der dynamischen Vernetzung wesentlich erleichtert. Die so zugänglichen feinen Morphologien zeigen sich in einer deutlich verbesserten Extrusionsoberfläche. Weiterhin lassen sich durch die oben beschriebene, verträglichkeitsvermittelnde Funktion des syndiotaktischen Polypropylens Compounds aus TPE-V herstellen, welche eine deutlich verbesserte Fließeigenschaft aufweisen, wie sie für den Spritzguss notwendig ist. So werden Einfallstellen oder Fehlstellen vermieden, die aus einem nicht ausreichenden Befüllen der Kavität oder einem vorzeitigen Anhaften der Schmelze an der Kavität resultieren.

Die erfindungsgemäßen, thermoplastischen Elastomere auf Basis TPE-V wie in Anspruch 1 definiert zeigen in der Extrusionsverarbeitung bis hin zu hohen Scherraten einen deutlich verbesserten Oberflächenausfall ohne Zusatz eines Gleitmittels.

Die Erfindung soll nachfolgend an drei Ausführungsbeispielen näher erläutert werden.

Die als Beispiele 1 - 3 aufgeführten Rezepturen verfügen über folgende Zusammensetzung (in Teilen):

**Tabelle 1**

| | Beispiel 1 | Beispiel 2 | Beispiel 3 |
|---|---|---|---|
| EPDM | 35 | 30 | 20 |
| i-PP | 10 | 15 | 20 |
| s-PP | 2 | 3 | 4 |
| Füllstoff | 10 | 10 | 10 |
| Öl | 10 | 10 | 10 |
| Alkylphenolharz | 2 | 2 | 2 |
| SnCl₂ | 0,25 | 0,25 | 0,25 |
| Stabilisator | 0,5 | 0,5 | 0,5 |

### Zu den Beispielen 1 - 3:

In einem gleichläufigen Zweischneckenkneter mit einem L/D-Verhältnis von 40 werden folgende Komponenten
- isotaktisches Polypropylen, MFR (2,16 kg/230°C) = 4 g/10 min
- EPDM, Mooney-Viskosität bei 125°C = 35
- syndiotaktisches Polypropylen, MFR (2,16 kg/230°C) = 2,5 g/10 min
- Calciumcarbonat
- Mineralöl einer Viskosität von 450 mPas (bei 20°C)
- Phenolharz, Erweichungspunkt 60°C)
- Zinnchlorid, Gehalt an Zinnchlorid > 98 %
- Stabilisator
über gravimetrische Dosierorgane kontinuierlich dosiert und dabei die Polymerschmelze über eine Vakuumpumpe entgast. Das resultierende Compound weist die in der Tabelle 2 aufgeführten Eigenschaften auf.

### Eigenschaftsvergleich:

Die folgende Tabelle zeigt einige wichtige mechanische Kenndaten der erfindungsgemäßen Rezepturen (Beispiele 1 - 3) und im Vergleich dazu solche nach dem Stand der Technik (Vergleichsbeispiele 1 - 2), sowie eine qualitative Bewertung der jeweils im Extrusionsverfahren erzielbaren Oberflächen.

Als Vergleichsbeispiele 1 und 2 dienten handelsübliche TPE-V unterschiedlicher Shore-Härten.

**Tabelle 2**

| | Beispiel 1 | Beispiel 2 | Beispiel 3 | Vergleichsbeispiel 1 | Vergleichsbeispiel 2 |
|---|---|---|---|---|---|
| Härte [Shore-A] | 55 | 65 | 75 | 55 | 75 |
| Druckverformungsrest 70°C/24h (%) | 30 | 33 | 35 | 30 | 35 |
| Reißfestigkeit [N/mm²] | 6 | 8 | 10 | 5 | 7,5 |
| Oberfläche* | + | ++ | ++ | - | - |

| | | | | | |
|---|---|---|---|---|---|
| *) Oberflächenbewertung (26x2 mm Bandextrudate): ++ Glatte Oberfläche + Shark-Skin Effekt kaum sichtbar - Shark Skin Effekt gut sichtbar | | | | | |

## Patentansprüche

1. Thermoplastische Elastomere auf Basis PP/EPDM mit vernetzter EPDM-Phase und syndiotaktischem Polypropylen als Viskositätsvermittler, bestehend aus
- Ethylen-Propylen-Terpolymer
- isotaktischem Polypropylen
- syndiotaktischem Polypropylen
- mineralischem Füllstoff
- Mineralöl
- Vernetzungskatalysator
- Alkylphenolharz.

2. Thermoplastische Elastomere nach Anspruch 1, wobei im Ethylen-Propylen-Terpolymer die Terkomponente ausgewählt ist aus der Gruppe 1, 4-Hexadien, Dicyclopentadien oder Ethylidennorbornen.

3. Thermoplastische Elastomere nach Anspruch 1, wobei das isotaktische Polypropylen ausgewählt ist aus der Gruppe der Polypropylen-Homopolymere und/oder Polypropylen-Copolymere.

4. Thermoplastische Elastomere nach Anspruch 1, wobei die mineralischen Füllstoffe ausgewählt sind aus der Gruppe Calciumcarbonat, Talkum oder Kaolin.

5. Thermoplastische Elastomere nach Anspruch 1, wobei die Mineralöle ausgewählt sind aus der Gruppe der naphthenbasierten oder paraffinbasierten Solvate.

6. Thermoplastische Elastomere nach Anspruch 1, wobei der Vernetzungskatalysator ausgewählt ist aus der Gruppe Zinn-(II)-Chlorid oder Salicylsäure.

7. Thermoplastische Elastomere nach Anspruch 1, wobei das Alkylphenolharz ausgewählt ist aus der Gruppe Octylphenol und/oder Nonylphenol.

8. Thermoplastische Elastomere nach den Ansprüchen 1 und 2, wobei der Gehalt an Ethylen-Propylen-Terpolymer im Reaktionsgemisch zwischen 20 und 50 Teilen beträgt.

9. Thermoplastische Elastomere nach den Ansprüchen 1 und 3, wobei der Anteil des isotaktischen Polypropylens im Reaktionsgemisch zwischen 10 und 50 Teilen beträgt.

10. Thermoplastische Elastomere nach den Ansprüchen 1 und 4, wobei der Anteil der Füllstoffe im Reaktionsgemisch zwischen 5 und 50 Teilen beträgt.

11. Thermoplastische Elastomere nach den Ansprüchen 1 und 5, wobei der Anteil der Mineralöle im Reaktionsgemisch zwischen 10 und 50 Teilen beträgt.

12. Thermoplastische Elastomere nach den Ansprüchen 1 und 6, wobei der Anteil des Vernetzungskatalysators im Reaktionsgemisch zwischen 0,1 und 2 Teilen beträgt.

13. Thermoplastische Elastomere nach den Ansprüchen 1 und 7, wobei der Anteil des Alkylphenolharzes im Reaktionsgemisch zwischen 0,5 und 5 Teilen beträgt.

14. Herstellung der thermoplastischen Elastomere nach einem der vorausgehenden Ansprüche, wobei das syndiotaktische Polypropylen zunächst in einem kontinuierlich arbeitenden Doppelschneckenkneter mit PP und EPDM im Einzugsbereich miteinander vermischt wird, so dass eine möglichst homogene Schmelze entsteht, und im zweiten Schritt, der sich in Schneckenrichtung stromauf befindet, durch Zugabe des Vernetzerharzes in Verbindung mit dem Katalysator das EPDM dynamisch vernetzt wird.

15. Verwendung der thermoplastischen Elastomere nach einem der Ansprüchen 1 bis 13, insbesondere zur Substitution von Gummiartikeln, bevorzugt für Dichtungen im Bereich Automobilbau oder Hochbau sowie für die Anwendung in Profilen mit Dämpfungsfunktionen oder als Stoßleisten.

## Claims

1. Thermoplastic elastomers based on PP/EPDM with crosslinked EPDM phase and syndiotactic polypropylene as viscosity promoter, consisting of
- ethylene-propylene terpolymer
- isotactic polypropylene
- syndiotactic polypropylene
- mineral filler
- mineral oil
- crosslinking catalyst
- alkylphenol resin.

2. Thermoplastic elastomers according to Claim 1, wherein the ter-component in the ethylene-propylene terpolymer is selected from the group consisting of 1,4-hexadiene, dicyclopentadiene and ethylidenenorbornene.

3. Thermoplastic elastomers according to Claim 1, wherein the isotactic polypropylene is selected from the group of the polypropylene homopolymers and/or polypropylene copolymers.

4. Thermoplastic elastomers according to Claim 1, wherein the mineral fillers are selected from the group consisting of calcium carbonate, talcum and kaolin.

5. Thermoplastic elastomers according to Claim 1, wherein the mineral oils are selected from the group of naphthene-based and paraffin-based solvates.

6. Thermoplastic elastomers according to Claim 1, wherein the crosslinking catalyst is selected from the group consisting of tin(II) chloride and salicylic acid.

7. Thermoplastic elastomers according to Claim 1, wherein the alkylphenol resin is selected from the group of octylphenol and/or nonylphenol.

8. Thermoplastic elastomers according to Claims 1 and 2, wherein the level of ethylene-propylene terpolymer in the reaction mixture is between 20 and 50 parts.

9. Thermoplastic elastomers according to Claims 1 and 3, wherein the proportion of isotactic polypropylene in the reaction mixture is between 10 and 50 parts.

10. Thermoplastic elastomers according to Claims 1 and 4, wherein the proportion of fillers in the reaction mixture is between 5 and 50 parts.

11. Thermoplastic elastomers according to Claims 1 and 5, wherein the proportion of mineral oils in the reaction mixture is between 10 and 50 parts.

12. Thermoplastic elastomers according to Claims 1 and 6, wherein the proportion of crosslinking catalyst in the reaction mixture is between 0.1 and 2 parts.

13. Thermoplastic elastomers according to Claims 1 and 7, wherein the proportion of alkylphenol resin in the reaction mixture is between 0.5 and 5 parts.

14. Production of the thermoplastic elastomers according to any of the preceding claims, wherein the syndiotactic polypropylene is initially mixed with PP and EPDM in the intake area of a continuously operating twin-screw extruder to obtain a very homogeneous melt and in a second step, situated upstream in the screw direction, the EPDM is dynamically crosslinked by addition of the crosslinker resin in conjunction with the catalyst.

15. Use of the thermoplastic elastomers according to any one of Claims 1 to 13, in particular for replacing rubber articles, preferably for seals in the area of automotive construction or civil engineering and also for use in profiles having shock-absorbing functions or as bumper strips.

## Revendications

1. Élastomères thermoplastiques à base de PP/EPDM à phase EPDM réticulée et de polypropylène syndiotactique en tant qu'agent promoteur de la viscosité, se composant:
- d'un terpolymère éthylène-propylène
- d'un polypropylène isotactique
- d'un polypropylène syndiotactique
- d'une charge minérale
- d'une huile minérale
- d'un catalyseur de réticulation
- d'une résine alkylphénolique.

2. Élastomères thermoplastiques selon la revendication 1, le ter-composant dans le terpolymère éthylène-propylène étant sélectionné parmi le groupe 1,4-hexadiène, dicyclopentadiène ou éthylidène-norbornène.

3. Élastomères thermoplastiques selon la revendication 1, le polypropylène isotactique étant sélectionné parmi le groupe des homopolymères du polypropylène et/ou des copolymères du polypropylène.

4. Élastomères thermoplastiques selon la revendication 1, les charges minérales étant sélectionnées parmi le groupe du carbonate de calcium, du talc ou du kaolin.

5. Élastomères thermoplastiques selon la revendication 1, les huiles minérales étant sélectionnées parmi le groupe des produits de solvatation à base de naphtène ou à base de paraffine.

6. Élastomères thermoplastiques selon la revendication 1, le catalyseur de réticulation étant sélectionné parmi le groupe du chlorure d'étain(II) ou de l'acide salicylique.

7. Élastomères thermoplastiques selon la revendication 1, la résine alkylphénolique étant sélectionnée parmi le groupe de l'octylphénol et/ou du nonylphénol.

8. Élastomères thermoplastiques selon les revendications 1 et 2, la teneur en terpolymère éthylène-propylène dans le mélange réactionnel étant comprise entre 20 et 50 parts.

9. Élastomères thermoplastiques selon les revendications 1 et 3, la proportion du polypropylène isotactique dans le mélange réactionnel étant comprise entre 10 et 50 parts.

10. Élastomères thermoplastiques selon les revendications 1 et 4, la proportion des charges dans le mélange réactionnel étant comprise entre 5 et 50 parts.

11. Élastomères thermoplastiques selon les revendications 1 et 5, la proportion des huiles minérales dans le mélange réactionnel étant comprise entre 10 et 50 parts.

12. Élastomères thermoplastiques selon les revendications 1 et 6, la proportion du catalyseur de réticulation dans le mélange réactionnel étant comprise entre 0,1 et 2 parts.

13. Élastomères thermoplastiques selon les revendications 1 et 7, la proportion de la résine alkylphénolique dans le mélange réactionnel étant comprise entre 0,5 et 5 parts.

14. Préparation des élastomères thermoplastiques selon l'une quelconque des revendications précédentes, le polypropylène syndiotactique étant mélangé tout d'abord dans la zone d'introduction avec le PP et l'EPDM dans un pétrisseur à double vis travaillant en continu, de telle sorte qu'il se forme une masse en fusion la plus homogène possible et que, dans une deuxième étape, qui a lieu en amont par rapport à la direction des vis, l'EPDM subisse une réticulation dynamique par addition de la résine de réticulation en conjonction au catalyseur.

15. Utilisation des élastomères thermoplastiques selon l'une quelconque des revendications 1 à 13, en particulier en vue de la substitution d'articles en caoutchouc, de préférence, pour des joints d'étanchéité dans le domaine de la construction automobile ou du bâtiment ainsi que pour l'utilisation dans des profilés ayant des fonctions d'amortissement ou en tant que dispositifs d'amortissement des chocs.
